Europäisches Patentamt

European Patent Office

Office européen des brevets

(11) Numéro de publication: **0 419 342 A1**

# (12) DEMANDE DE BREVET EUROPEEN

(21) Numéro de dépôt: 90402565.7

(22) Date de dépôt: 18.09.90

(51) Int. Cl.⁵: **H04N 5/33**, H04N 5/217, G01J 5/48

(30) Priorité: 22.09.89 FR 8912484

(43) Date de publication de la demande:
27.03.91 Bulletin 91/13

(84) Etats contractants désignés:
DE GB IT

(71) Demandeur: THOMSON-CSF
51, Esplanade du Général de Gaulle
F-92800 Puteaux(FR)

(72) Inventeur: Le Bars, Jean-François

THOMSON-CSF SCPI Cédex 67
F-92045 Paris la Défense(FR)
Inventeur: Deler, Jean-Marie
THOMSON-CSF SCPI Cédex 67
F-92045 Paris la Défense(FR)
Inventeur: Baron, Laurent
THOMSON-CSF SCPI Cédex 67
F-92045 Paris la Défense(FR)

(74) Mandataire: Turlèque, Clotilde et al
THOMSON-CSF SCPI
F-92045 PARIS LA DEFENSE CEDEX 67(FR)

(54) **Dispositif de correction des défauts d'une suite d'images analysées par un capteur infrarouge matriciel à intégration.**

(57) Le dispositif comporte :
- des premiers moyens (21) pour déterminer un signal de correction variable en fonction de la température du fond des images (Tf), égal au produit d'une valeur représentant la luminance moyenne d'une image précédant l'image en cours de correction, et d'un signal représentant approximativement la sensibilité de chaque cellule du oapteur, constitué des valeurs d'un signal vidéo correspondant à une image analysée au cours d'une période de pré-calibration ;
- des seconds moyens (22) pour déterminer un second signal de correction, en stockant les valeurs du premier signal vidéo corrigé (Vec), pendant une période de calibration.

Application aux caméras infrarouges des systèmes d'armes.

FIG.4

# DISPOSITIF DE CORRECTION DES DÉFAUTS D'UNE SUITE D'IMAGES ANALYSÉE PAR UN CAPTEUR INFRAROUGE MATRICIEL À INTÉGRATION

L'invention concerne un dispositif de correction des défauts d'une suite d'images analysée par un capteur infrarouge matriciel à intégration, ce capteur étant constitué d'une matrice de cellules photosensibles fournissant un signal vidéo qui traduit successivement la luminance intégrée, de chaque pixel d'une image.

Les caméras infrarouges classiques comportent un détecteur ponctuel ou une barrette de détecteurs analysant une image grâce à un balayage optomécanique. Elles fournissent un signal vidéo traduisant la luminance instantanée de chaque pixel. Il existe désormais des capteurs matriciels qui ne nécessitent pas de balayage optomécanique pour analyser une image. L'analyse successive des pixels est réalisé à l'intérieur du capteur, par des dispositifs électroniques du type à couplage de charges, ou à transfert de charges, ou autres. Dans tous les cas, le capteur comporte : des capacités de stockage des charges engendrées par les photons, entre deux lectures ; un dispositif d'adressage permettant d'accéder sélectivement aux capacités de stockage ; et un dispositif de transfert de charges, permettant d'évacuer les charges vers une sortie et obtenir un signal vidéo traduisant successivement la quantité de charges stockée dans chacune des capacités de stockage.

La quantité de charges stockée dans une capacité de stockage est fonction de la luminance du pixel correspondant à cette capacité, et est proportionnelle a la durée entre deux lectures. Le signal vidéo correspondant représente donc la luminance intégrée. Lorsqu'une image comporte un fond ayant une certaine luminance, le signal vidéo comporte une composante continue qui est fonction de la luminance du fond d'image. Cette luminance est elle-même fonction de la température du fond, puisqu'il s'agit d'images infrarouge. Cette composante continue a une valeur relative très importante par rapport la composante variable représentant une scène. Dans les bandes spectrales s'étendant de 3 à 5 microns et de 8 à 12 microns par exemple, un écart de température égal à un degré, de la scène par rapport au fond, est traduit typiquement par une variation de 1% du signal vidéo par rapport à la composante continue.

Pour exploiter le signal vidéo, il est nécessaire d'éliminer la composante continue afin de n'amplifier que la composante variable correspondant aux détails de la scène. Malheureusement il n'est pas possible de soustraire simplement une valeur constante au signal vidéo, d'une part parce que chaque cellule du capteur fournit une réponse légèrement différente de celles des autres cellules, et d'autre part parce que cette réponse varie en fonction de la luminance du fond d'image, c'est-à-dire varie en fonction de la température de ce fond d'image, et accessoirement en fonction de la température des structures environnant le capteur.

Pendant l'analyse d'une image représentant un fond uniforme, les cellules d'un même capteur fournissent des réponses légèrement différentes qui constituent un signal vidéo comportant un bruit fixe superposé à une composante continue égale la réponse moyenne des cellules. Les valeurs de sensibilité des cellules d'un même capteur se répartissent, en première approximation, selon une loi gaussienne ayant un écart type égal à quelques pour-cents. En l'absence de correction, une suite d'images représentant un fond uniforme est restituée par des images comportant des défauts constants d'uniformité. Ces défauts d'uniformité sont gênants non seulement pour l'observation des images restituées, mais aussi pour une exploitation telle qu'une détection de cible ou une poursuite de cible. Pour corriger les images restituées, il est nécessaire de corriger le signal vidéo de telle sorte qu'il ait un niveau constant pour un fond uniforme et que ce niveau soit maintenu lorsque la température du fond d'image évolue.

Un premier procédé connu pour corriger de telles images consiste simplement à mettre en mémoire les valeurs du signal vidéo d'une image comportant un fond uniforme, pendant une période de calibration ; puis à soustraire les valeurs du signal vidéo de cette image respectivement aux valeurs du signal vidéo des images courantes. Pour la calibration, une image représentant un fond uniforme est obtenue en plaçant un obturateur devant l'objectif de la caméra, ou bien en défocalisant les images de la scène courante.

Ce premier procédé de correction permet d'annuler exactement le signal vidéo correspondant au fond uniforme, pour la température qui était celle du fond au moment de la calibration. Lorsque la température du fond évolue, l'annulation n'est plus réalisée. Non seulement il apparaît une variation de réponse pour chaque cellule, mais en outre cette variation n'est pas identique, malgré l'uniformité du fond, puisque la sensibilité des cellules n'est pas uniforme.

Un second procédé connu consiste, en plus de cette correction fixe, à réaliser une correction variable en fonction de la température du fond, et une correction variable en fonction de la température des structures environnant le capteur. En effet, le capteur voit non seulement l'image à analyser, mais aussi des radiations infrarouges émises par les structures l'environnant. Le second procédé consiste donc à mesurer en laboratoire, une fois pour toutes, la sensibilité de chaque cellule vis-à-vis de la température du fond et la sensibilité de chaque cellule vis-à-vis de la température des structures, et à stocker ces valeurs de sensibilité dans deux mémoires. Ces valeurs de sensibilité sont exactes pour une température donnée, et ne sont qu'approximatives au voisinage de cette température. Pour corriger une suite d'images, le procédé consiste ensuite : à mesurer la température du fond des images et la température des structures ; à calculer deux signaux de correction, pour chaque pixel, en fonction de ces mesures de température et en fonction des valeurs de sensibilité stockées en mémoire ; puis à sous traire ces deux signaux de correction variable, au signal vidéo ayant déjà subi la soustraction d'un signal de correction fixe déterminé selon le premier procédé connu.

Ce second procédé connu a pour inconvénient d'être complexe à mettre en oeuvre, puisqu'il nécessite de mesurer la température du fond et la température de la structure, et nécessite une précision élevée car l'erreur de calcul sur l'ensemble des signaux de correction doit rester très inférieure aux valeurs du signal représentant la scène qui sont, rappelons le, de l'ordre de 1% de la valeur de la composante continue du signal vidéo avant correction. D'autre part, il n'est pas possible de modifier les valeurs de sensibilité stockées en mémoire, car elles doivent être mesurées en laboratoire pour pouvoir faire varier les deux températures. Lorsque la température du fond évolue beaucoup, les valeurs stockées ne permettent plus une correction suffisamment précise. Des défauts apparaissent dans les images restituées.

Le but de l'invention est de proposer un dispositif de correction qui soit plus simple à réaliser que les dispositifs mettant en oeuvre ce second procédé connu, tout en obtenant des performances comparables lorsque la température du fond évolue et permettant de refaire la calibration des valeurs de sensibilité lorsque la température de fond a beaucoup évolué. L'objet de l'invention est un dispositif comportant essentiellement deux étages : un premier étage réalisant une correction variable en fonction de la température du fond et d'une estimation de sensibilité des cellules ; et un deuxième étage réalisant une correction fixe. Le deuxième étage permet d'obtenir une annulation exacte du signal vidéo, pour chaque pixel, pour une température donnée. Le premier étage permet d'obtenir une correction variable en fonction de la température, avec une approximation suffisante, en étant plus simple que les dispositifs connus. D'autre part, il permet de réaliser facilement une calibration lorsque la température du fond d'image a beaucoup évolué.

Selon l'invention, un dispositif de correction des défauts d'une suite d'images analysée par un capteur infrarouge matriciel à intégration, les cellules constituant ce capteur ayant des différences de sensibilité, comportant : des premiers moyens de correction pour déterminer et soustraire, au signal vidéo fourni par le capteur, un premier signal de correction variable en fonction de la température du fond des images ; et des seconds moyens de correction pour déterminer et soustraire au signal vidéo, un second signal de correction ; est caractérisé en ce que les seconds moyens sont placés en aval des premiers moyens, pour déterminer le second signal de correction en fonction d'un premier signal vidéo corrigé fourni par les premiers moyens ; et comportent des moyens pour stocker des valeurs du premier signal vidéo corrigé, au cours d'une période dite de calibration, pendant laquelle les images analysées représentent un fond uniforme ; les valeurs stockées étant relues périodiquement pour constituer le second signal de correction.

L'invention sera mieux comprise et d'autres détails apparaîtront à l'aide de la description ci-dessous et des figures l'accompagnant :
- la figure 1 représente le schéma synoptique d'un exemple de réalisation d'un dispositif mettant en oeuvre le second procédé connu, décrit précédemment ;
- les figures 2 et 3 illustrent le fonctionnement d'un capteur infrarouge matriciel ;
- la figure 4 représente le schéma synoptique d'un exemple de réalisation du dispositif selon l'invention.

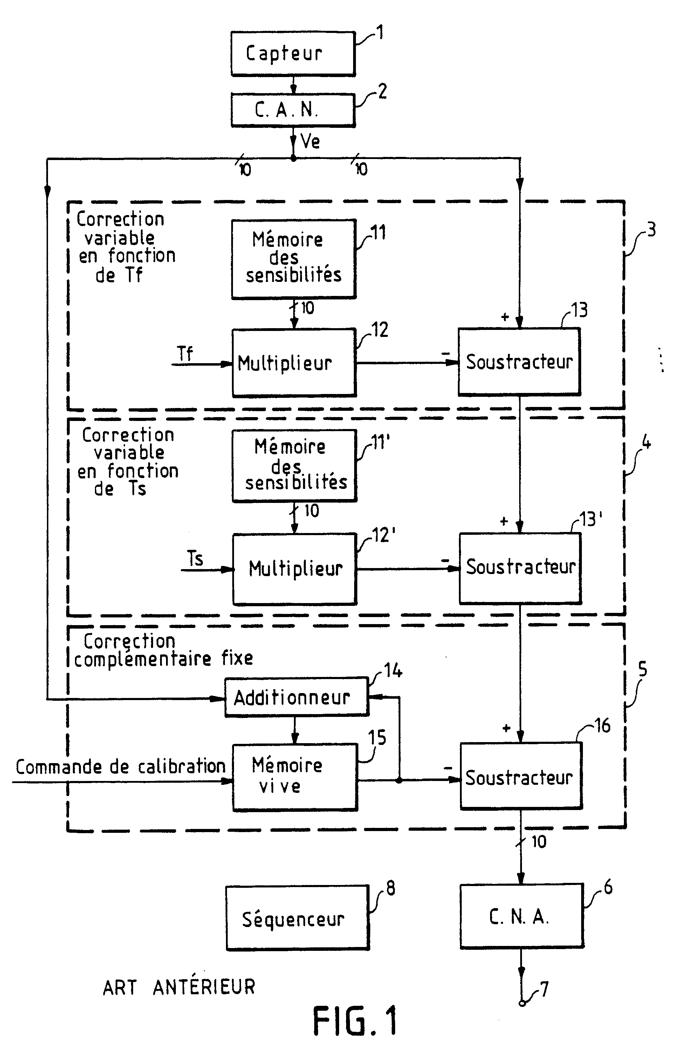

La figure 1 représente le schéma synoptique d'un exemple de réalisation d'un dispositif de correction selon l'art antérieur, comportant essentiellement : des moyens 3 pour déterminer un premier signal de correction variable en fonction de la température Tf du fond des images ; des moyens 4 pour déterminer un second signal de correction variable en fonction de la température Ts des structures voisines du capteur ; et des moyens 5 pour déterminer un signal de correction complémentaire fixe, qui est constant pour un pixel donné

Un capteur infrarouge matriciel 1, fournit un signal vidéo analogique à un convertisseur analogique-numérique (C.A.N.), 2, qui convertit ce signal vidéo en une suite de valeurs numériques codées sur 10 bits. Ces valeurs numériques sont appliquées d'une part à une entrée des moyens 5 et, d'autre part, à une entrée des moyens 3. Les moyens 3, 4, 5 comportent chacun un soustracteur : 13, 13′, 16. Ces soustracteurs sont reliés en série pour soustraire successivement au signal vidéo les trois signaux de correction. L'ordre dans lequel ces soustracteurs sont disposés est indifférent. La sortie du soustracteur 16 constitue la sortie des moyens 5 et fournit les valeurs d'un signal vidéo corrigé à une entrée d'un convertisseur numérique-analogique (C.A.N.) 6. Ce convertisseur 6 restitue le signal vidéo corrigé, sous forme analogique, à une borne de sortie 7 du dispositif de correction.

Au voisinage d'une température de fond Tf donnée et au voisinage d'une température de structure Ts donnée, la valeur du signal vidéo fourni par une cellule de coordonnées i,j dans la matrice constituant le capteur, peut être représentée par l'équation ci-dessous, à une constante près :

$$Ve = Gijs.\Omega s.Ls(Ts) + Gijf.\Omega f.Lf(Tf) \qquad (1)$$

où Gijs est un coefficient représentant la sensibilité de la cellule vis à vis de la luminance Ls(Ts) des structures environnant le capteur, celles-ci étant vues par cette cellule sous un angle solide $\Omega s$ ; et où Gijf est un coefficient représentant la sensibilité de la cellule vis à vis de la luminance Lf(Tf) du fond d'image, lequel est vu par cette cellule sous un angle solide $\Omega f$. La luminance du fond est liée à sa température par une relation connue. De même la luminance des structures est liée à leur température par une relation connue. Au voisinage des températures Ts et Tf données, la valeur du signal vidéo peut être représentée encore plus simplement par une équation de la forme suivante, à une constante près :

$$Ve = a.Ts + b.Tf \qquad (2)$$

où a et b sont des coefficients qui représentent la sensibilité vis-à-vis de Ts et la sensibilité vis-à-vis de Tf de la cellule considérée. Les valeurs de a et b sont différentes pour chaque cellule du capteur.

Les moyens 3 comportent : une mémoire 11, stockant les valeurs b des sensibilités vis-à-vis de Tf un multiplieur 12 ; et un soustracteur 13. Une sortie de la mémoire 11 est reliée à une première entrée du multiplieur 12. Une seconde entrée du multiplieur 12 reçoit la valeur Tf de la température du fond, qui est fournie par un appareil de mesure non représenté. Une sortie du multiplieur 12 est reliée à une entrée du soustracteur 13. Une autre entrée du soustracteur 13 reçoit la valeur Ve du signal vidéo. La sortie du soustracteur 13 constitue une sortie des moyens 3, reliée à une entrée des moyens 4 pour lui fournir un signal vidéo corrigé en soustrayant un signal de correction de valeur b.Tf.

Les moyens 4 ont une structure analogue aux moyens 3, pour soustraire un second signal de correction, de valeur a.Ts. La valeur Ts de la température des structures, est fournie par un appareil de mesure non représenté. Une mémoire 11′ stocke les valeurs b des sensibilités des cellules vis-à-vis de la température Ts.

Les coefficients a et b sont stockés dans les mémoires 11 et 11′, sous la forme de mots binaires de 10 bits, au cours d'une opération de calibration réalisée une fois pour toute, en laboratoire, et ne sont valables qu'au voisinage d'une température Ts donnée et d'une température Tf donnée. Plus ces températures s'éloignent de ces valeurs données, et moins la correction des défauts est précise. Il n'est pas possible de recalibrer facilement les coefficients a et b.

Les moyens 5 comportent : un additionneur 14 ; une mémoire vive 15 ; et un soustracteur 16. L'additionneur 14 et la mémoire vive 15 constituent un accumulateur moyenneur qui calcule et stocke, pour chaque pixel, la valeur moyenne du signal vidéo fourni par le capteur 1 au cours d'une période de calibration pendant laquelle l'image analysée représente un fond uniforme.

Pendant la période de calibration, un opérateur envoie un signal dit de calibration, qui a pour effet de valider la mémoire 15 en écriture et en lecture pour réaliser le calcul de la valeur moyenne du signal vidéo pour chaque pixel, sur un nombre d'images qui peut être égal à 8, par exemple.

Puis, pendant la période d'exploitation, la mémoire vive 15 est validée seulement en lecture pour fournir successivement la valeur moyenne du signal vidéo de chaque pixel. Cette suite de valeurs constitue le troisième signal de correction. Ce dernier est soustrait au signal vidéo, déjà corrigé par les moyens 3 et 4, au moyen du soustracteur 16.

Un séquenceur 8 fournit les signaux d'horloge et les signaux de commande de lecture et d'écriture pour tous les éléments du dispositif. Le convertisseur numérique-analogique 6 convertis sous forme analogique les valeurs du signal vidéo corrigé.

Les valeurs numériques des signaux de correction et du signal vidéo sont codées sur 10 bits afin de conserver une précision de calcul suffisante pour ne pas ajouter des défauts aux images restituées.

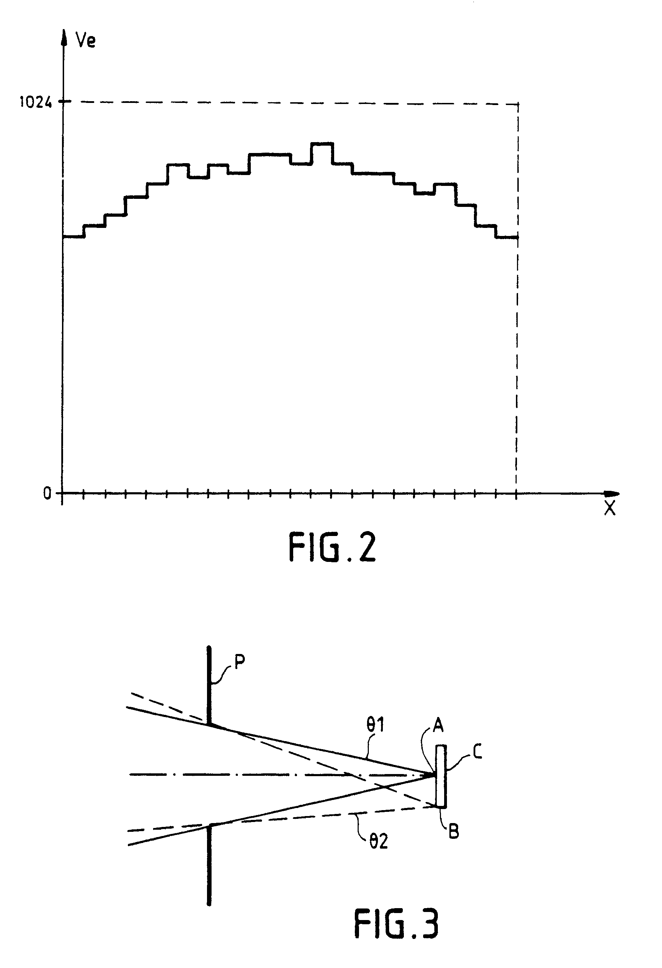

La figure 2 représente le graphe des valeurs du signal vidéo Ve fourni par une ligne de la matrice de cellules constituant le capteur, en fonction de l'abscisse x de chaque cellule dans cette ligne. Dans cet exemple, l'échelle des valeurs numériques du signal vidéo s'étend de 0 à 1024, et l'image représente un fond uniforme. Le graphe a la forme d'un dôme constitué de niveaux discrets, à cause de la quantification des valeurs du signal vidéo, et il comporte certaines irrégularités.

La forme en dôme est due à l'effet de structure, lequel est illustré par la figure 3. Un capteur C est muni d'un dispositif optique non représenté qui a une pupille d'entrée P délimitant l'angle de vue de chaque cellule du capteur C. Une cellule A située au centre du capteur C, a un angle de vue $\theta 1$ qui est supérieur à l'angle de vue $\theta 2$ d'une cellule quelconque B située à la périphérie du capteur C. Cette différence des angles de vue a pour conséquence que les cellules proches du centre reçoivent plus de radiations infrarouges venant de la scène et moins de radiations infrarouges provenant des structures environnant le capteur. Au contraire, les cellules situées à la périphérie reçoivent moins de radiations provenant de la scène et plus de radiations provenant des structures. En pratique les radiations provenant des structures sont nettement moins importantes que les radiations provenant de la scène. Ceci explique que le signal vidéo fourni par les cellules proches du centre a une amplitude supérieure à celui fourni par les cellules de la périphérie.

Les irrégularités qui s'ajoutent à l'effet de dôme sont dues à la non uniformité des sensibilités des cellules. Lorsque la température Tf du fond d'image évolue, l'ensemble du graphe se déplace verticalement sans déformation, en première approximation. Il en est de même lorsque la température Ts des structures voisines évolue. Les variations du signal vidéo dues à l'évolution de la température Ts sont faibles par rapport aux variations dues à l'évolution de la température Tf, car le terme de l'équation (1) correspondant à la température Tf est supérieur au terme correspondant à la température Ts. Si le capteur est muni d'un dispositif optique à faible ouverture, plus petite que f/3 où f est la distance focale, il est possible de négliger totalement les variations de Ts. C'est ce qui est réalisé dans le dispositif selon l'invention.

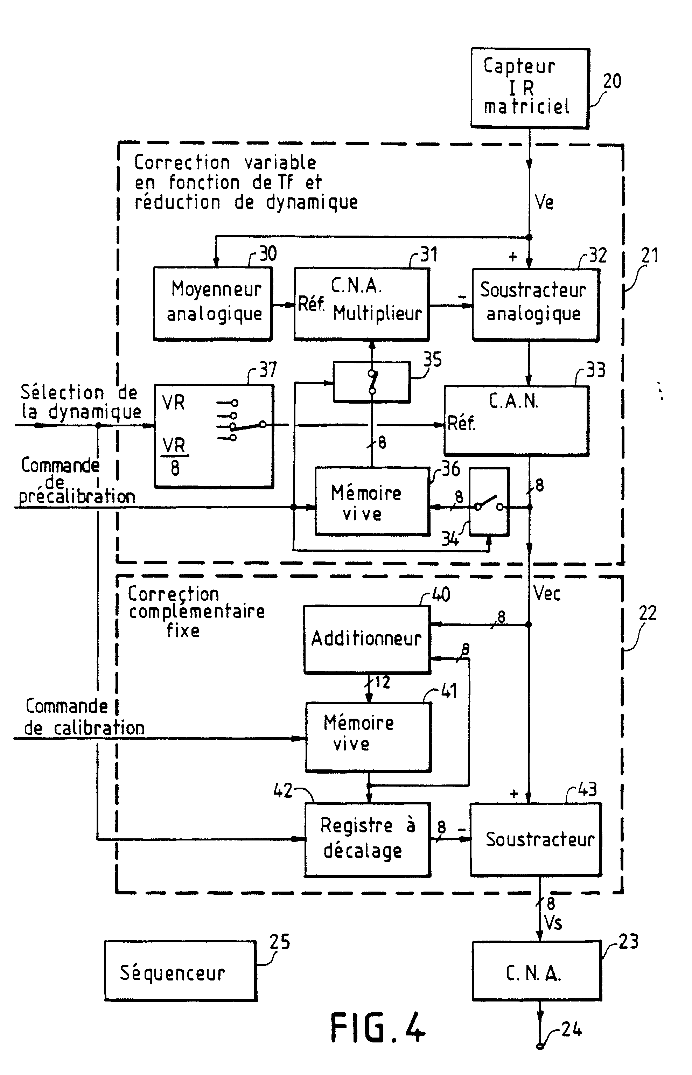

La figure 4 représente le schéma synoptique d'un premier exemple de réalisation du dispositif selon l'invention. Il comporte des premiers moyens de correction 21 qui déterminent un premier signal de correction variable en fonction de la température Tf du fond des images, en négligeant les variations de la température des structures, de telle sorte que le graphe de ce signal de correction soit aussi proche que possible du graphe du signal vidéo et évolue dans le même sens en fonction de la température Tf.

Les premiers moyens de correction 21 comportent : des moyens pour déterminer approximativement un signal proportionnel à la sensibilité de chaque cellule du capteur, pour une température donnée, au cours d'une période dite de pré-calibration pendant laquelle les images représentent un fond uniforme des moyens pour déterminer un signal proportionnel à la luminance du fond des images courantes, car elle est fonction de la température Tf du fond des images courantes ; et des moyens pour faire le produit de ces deux signaux et obtenir ainsi un signal de correction variable en fonction de la température du fond, et proportionnel à la sensibilité de chaque cellule. Ce premier signal de correction permet de compenser, avec une bonne approximation, les variations du signal vidéo quand la température du fond d'image évolue à partir d'une température donnée.

Pour annuler complètement les variations du signal vidéo dues aux différences de sensibilité des cellules, au moins pour une température de fond donnée, le dispositif selon l'invention comporte en outre des seconds moyens 22 pour déterminer un second signal de correction, en stockant les valeurs du premier signal vidéo corrigé, fournies par les moyens 21, pendant une période dite de calibration, postérieure à la période de pré-calibration et pendant laquelle les images représentent un fond uniforme. Les moyens 22 soustraient ce second signal de correction au premier signal vidéo corrigé, pendant la période d'exploitation postérieure à la période de calibration et fournissent ainsi un second signal vidéo corrigé.

Un capteur infrarouge matriciel 20 est relié à une entrée des premiers moyens 21. Une sortie des moyens 21 est reliée à une entrée des seconds moyens 22. Une sortie des moyens 22 est reliée à une entrée d'un convertisseur numérique-analogique (C.N.A.) 23 dont la sortie est reliée à une borne de sortie 24 du dispositif de correction. Un séquenceur classique 25 fournit des signaux d'horloge et des signaux de commande l'ensemble des éléments du dispositif.

Les moyens 21 comportent : un moyenneur analogique 30 ; un convertisseur numérique-analogique (C.N.A.) multiplieur 31 ; un convertisseur analogique-numérique (C.A.N.) 33 ; un soustracteur analogique 32 ; deux dispositifs de commutation, 34 et 35 ; une mémoire vive 36 ; et un multiplexeur à quatre entrées et une sortie, 37.

L'entrée des moyens 21 est reliée à une entrée du moyenneur 30 et à une première entrée du soustracteur 32. Une sortie du moyenneur 30 est reliée à une entrée de référence du convertisseur 31. Une sortie du convertisseur 31 est reliée à une seconde entrée du soustracteur 32. Une entrée de données du convertisseur 31 est reliée à une sortie de la mémoire 36 par l'intermédiaire du dispositif de commutation 35. La sortie du soustracteur 32 est reliée à une entrée de données du convertisseur 33. Une entrée de référence du convertisseur 33 est reliée à la sortie du multiplexeur 37. La sortie du convertisseur 33 est reliée d'une part à la sortie des moyens 21 et d'autre part à une entrée de données de la mémoire 36 par l'intermédiaire du dispositif de commutation 34.

Les dispositifs de commutation 34 et 35, ainsi qu'une entrée de validation d'écriture de la mémoire vive 36 sont commandés par un signal de commande dit de pré-calibration qui est fourni par un dispositif, non représenté, qui est actionné par un utilisateur lorsqu'il souhaite recalibrer les moyens 21. Le multiplexeur 37 est commandé par un signal de commande, dit de sélection de la dynamique, qui est fourni par un dispositif non représenté, qui est actionné par l'utilisateur pour modifier le contraste des images restituées.

Les moyens 22 comportent : un additionneur numérique 40 ; une mémoire vive 41 ; un registre à décalage 42 ; et un soustracteur 43.

L'entrée des moyens 22 est reliée à une première entrée de l'additionneur 40 et à une première entrée du soustracteur 43. Une sortie de l'additionneur 40 est reliée à une entrée de données de la mémoire vive 41. La sortie de la mémoire 41 est reliée à une seconde entrée de l'additionneur 40 et à une entrée de données du registre à décalage 42. Une sortie de données du registre 42 est reliée à une seconde entrée du soustracteur 43. Une sortie du soustracteur 43 constitue la sortie des moyens 22. Une entrée de commande de la mémoire vive 41 reçoit un signal dit de commande de calibration, qui est fourni par un dispositif non représenté qui est actionné par un utilisateur du dispositif de correction, lorsqu'il souhaite recalibrer les moyens 22. Une entrée de commande du registre à décalage 42 reçoit le signal de sélection de la dynamique.

Le signal de commande de pré-calibration et le signal de commande de calibration commandent un dispositif de mise au point, non représenté, déplaçant l'objectif de la caméra, pour défocaliser les images, afin que les images analysées représentent un fond uniforme. Après la pré-calibration et la calibration, le dispositif de mise au point refait automatiquement la mise au point sur la scène observée.

Pendant la phase de pré-calibration, la mémoire vive 36 est validée en écriture, le dispositif de commutation 34 transmet les valeurs numériques fournies par le convertisseur 33, et le dispositif de commutation 35 est ouvert pour isoler l'entrée de données du convertisseur 31. La sortie du convertisseur 31 fournit alors un signal nul au soustracteur 32. La valeur Ve du signal vidéo est alors transmise, sans modification, par le soustracteur analogique 32. Elle est convertie en un mot binaire de 8 bits par le convertisseur 33, et ce mot de 8 bits est inscrit dans la mémoire vive 36. Le séquenceur 25 commande ainsi l'inscription de toutes les valeurs du signal vidéo d'une image, dans la mémoire 36, chaque fois qu'un signal de commande de pré-calibration est fourni au dispositif de correction. Ces valeurs représentent approximativement la sensibilité de chaque cellule pour la température que le fond avait au moment de la pré-calibration.

Pendant la phase d'exploitation, le dispositif de commutation 34 isole l'entrée de données de la mémoire 36, le dispositif de commutation 35 relie la sortie de la mémoire 36 à l'entrée de données du convertisseur 31, et la mémoire 36 est validée en lecture. Les valeurs stockées dans la mémoire 36 sont lues périodiquement, à la fréquence des images. Le moyenneur analogique 30 détermine une valeur moyenne du signal vidéo Ve pendant la durée d'une image. Il fournit donc un signal traduisant la luminance moyenne de l'image précédant l'image en cours de correction. Cette valeur de luminance est fonction de la température Tf du fond des images courantes. Naturellement, il est envisageable de faire la moyenne sur une pluralité d'images.

Le convertisseur 31 joue aussi le rôle d'un multiplieur car il fournit sur sa sortie un signal analogique proportionnel à la tension appliquée à son entrée de référence. Ainsi il fournit au soustracteur 32, sous forme analogique, un signal de correction proportionnel à la valeur moyenne déterminée par le moyenneur 30 et à la valeur numérique lue dans la mémoire 36.

Le signal de correction fourni par le convertisseur 31 est soustrait au signal vidéo, sous forme analogique, dans le soustracteur 32. Le signal vidéo n'est converti sous la forme numérique qu'après cette première correction. La valeur du signal de correction est en général très supérieure aux valeurs des variations du signal vidéo Ve correspondant à la scène, par conséquent le fait de soustraire le signal de correction réduit beaucoup la dynamique du signal vidéo. Il est alors possible de convertir le signal vidéo sous la forme de mots binaires de 8 bits au lieu de 10 bits qui seraient nécessaires si la conversion avait lieu avant la correction. Un signal vidéo analogique ayant une valeur variant de 2 volts à 2,5 volts, par exemple, est transformé ainsi en un signal vidéo analogique corrigé variant de 0 à 0,5 volt. Il est converti ensuite en mots binaires de 8 bits. La résolution est rigoureusement la même que si le signal vidéo non corrigé était converti en mots binaires de bits, comme ce serait le cas dans le dispositif selon l'Art Antérieur. Cette réduction de 10 bits à 8 bits de tous les composants numériques du dispositif simplifie sa réalisation et réduit considérablement le coût des convertisseurs 31, 33, et 23.

D'autre part, cet exemple de réalisation permet à l'utilisateur d'améliorer, dans certains cas, le contraste des images restituées. Le multiplexeur 37 lui permet de sélectionner une tension de référence parmi quatre tensions : VR, VR/2, VR/4, VR/8. Pendant la période de pré-calibration l'utilisateur sélectionne la plus grande tension de référence : VR, car l'image analysée représentant un fond uniforme peut être entachée d'un dôme excessif dépendant des géométries relatives détecteur/optique. Puis pendant la période d'exploitation, l'utilisateur sélectionne une tension de référence d'autant plus petite que la scène comporte des détails plus contrastés. Lorsque le signal vidéo comporte des valeurs excédant la capacité du convertisseur 33, l'utilisateur sélectionne une tension de référence supérieure à VR/8.

Par exemple, si le signal vidéo corrigé a des valeurs numériques s'étendant sur 8 niveaux seulement, pour une tension de référence égale à VR, un changement de cette tension de référence à VR/8 permet de dilater les variations du signal vidéo sur 64 niveaux pour augmenter le contraste. Naturellement, pour d'autres images plus contrastées, la capacité du convertisseur 33 peut être dépassée, et l'utilisateur devra alors ramener la tension de référence à VR/4, ou VR/2, ou VR, pour pouvoir observer toutes les valeurs de luminance des images. Ce mode de réalisation particulier du dispositif selon l'invention a donc pour avantage de permettre une amélioration de l'exploitation des images, pour un faible coût.

Le premier signal vidéo corrigé, Vec, est ensuite corrigé par les moyens 22 qui lui soustraient un signal de correction ayant des valeurs fixes qui sont lues périodiquement dans la mémoire 41 à la fréquence des images. Ces valeurs sont stockées dans la mémoire vive 41 pendant la période de calibration. Pendant cette période de calibration, la mémoire vive 41 est validée en écriture. Elle constitue avec l'additionneur 40 un accumulateur permettant d'additionner 16 valeurs du premier signal vidéo corrigé Vec, pour chaque pixel, afin de déterminer une valeur moyenne pour ce pixel. Le résultat de l'accumulation est divisé par 16, simplement en abandonnant les deux bits de plus faible poids, du mot binaire représentant ce résultat. Le fait de faire la moyenne sur seize images supprime l'effet du bruit du capteur sur le second signal de correction. Il est à remarquer que, contrairement à ce qui se passe dans le dispositif selon l'Art Antérieur, ce sont des valeurs du premier signal vidéo corrigé qui sont utilisées et non pas des valeurs du signal vidéo directement fourni par le capteur. Les moyens 22 permettent de corriger, au moins pour une température de fond donnée, les défauts dus aux approximations sur le premier signal de correction.

Pendant la période d'exploitation qui suit la période de calibration, la mémoire 41 est validée seulement en lecture. Elle fournit à la seconde entrée du soustracteur 43 une suite de valeurs moyennes qui constitue le second signal de correction. Ces valeurs transitent par le registre à décalage 42 qui réalise un décalage fonction du signal de commande de dynamique, et tel que les valeurs du second signal de correction comportent le même nombre de niveaux que les valeurs du premier signal vidéo corrigé fourni par le convertisseur 33.

Pendant la période de calibration, le convertisseur 33 reçoit une tension de référence égale à VR/8, par conséquent les valeurs moyennes stockées dans la mémoire 41 correspondent à cette tension de référence. Pendant la période d'exploitation, si l'utilisateur sélectionne une autre tension de référence pour permettre une restitution correcte des images, le signal de commande de sélection de la dynamique commande aussi le registre à décalage 42 de façon à décaler chaque mot binaire lu dans la mémoire 41, d'un bit, de deux bits, ou de trois bits, selon que la tension de référence sélectionnée est VR/4, VR/2, ou VR.

La sortie du soustracteur 43 fournit un second signal vidéo corrigé Vs, sous forme numérique. Le convertisseur 23 le convertit sous forme analogique.

Le fait de négliger l'effet des variations de la température des structures permet d'estimer de manière simple la sensibilité de chaque cellule aux variations de la température du fond d'image, à partir de la réponse de chaque cellule une luminance donnée. Il en découle une simplification du dispositif, puisqu'il ne comporte pas de moyens pour stocker les valeurs de sensibilité à la température des structures. En outre, cette manière d'estimer la sensibilité permet de refaire une calibration de la sensibilité aussi souvent que l'utilisateur le souhaite. Lorsque la température du fond évolue dans une plage très large, des défauts peuvent apparaître dans les images, à cause de la non linéarité des réponses des cellules ; des différences de courants d'obscurités ; et autres causes qui sont négligées en première approximation. C'est donc un avantage de pouvoir refaire la précalibration et la calibration à volonté.

L'invention est applicable notamment aux caméras infrarouges des systèmes d'armes.

## Revendications

1. Dispositif de correction des défauts d'une suite d'images analysée par un capteur infrarouge matriciel à intégration, les cellules constituant ce capteur (20) ayant des différences de sensibilité, comportant : des premiers moyens de correction (21) pour déterminer et soustraire, au signal vidéo fourni par le capteur, un premier signal de correction variable en fonction de la température du fond des images ; et des seconds moyens de correction (22) pour déterminer et soustraire, au signal vidéo, un second signal de correction ;
caractérisé en ce que les seconds moyens (22) sont placés en aval des premiers moyens (21), pour déterminer le second signal de correction en fonction d'un premier signal vidéo corrigé (Vec) fourni par les premiers moyens (21) ; et comportent des moyens (40, 41) pour stocker des valeurs du premier signal vidéo corrigé (Vec), au cours d'une période dite de calibration, pendant laquelle les images analysées représentent un fond uniforme ; les valeurs stockées étant relues périodiquement pour constituer le second signal de correction.

2. Dispositif selon la revendication 1, caractérisé en ce que les premiers moyens (21) comportent :

- des moyens (30) pour déterminer un signal proportionnel à la luminance moyenne d'au moins une image précédant une image en cours de correction ;

- des moyens (34 à 36) pour déterminer approximativement un signal proportionnel à la sensibilité de chaque cellule du capteur, pour une température donnée, au cours d'une période dite de pré-calibration, et pendant laquelle les images analysées représentent un fond uniforme ;

- des moyens (31) pour faire le produit de ces signaux, ledit produit constituant le premier signal de correction.

3. Dispositif selon la revendication 2, caractérisé en ce que les moyens (34 à 36) pour déterminer approximativement un signal proportionnel à la sensibilité de chaque cellule du cap teur, pour une température donnée, comportent des moyens (31, 33 à 36) pour stocker les valeurs du signal vidéo (Ve) fourni par le capteur pendant la période de pré-calibration, puis restituer ensuite ces valeurs périodiquement.

4. Dispositif selon la revendication 1, caractérisé en ce que les premiers moyens de correction (21) comportent des moyens (33, 37) pour augmenter la dynamique du premier signal vidéo corrigé (Vec) et en ce que les seconds moyens de correction (22) comportent des moyens (42) pour augmenter dans le même rapport la dynamique du second signal de correction ; ces moyens (33, 37, 42) étant couplés, et réglables par un utilisateur du dispositif de correction.

5. Dispositif selon la revendication 1, caractérisé en ce que les moyens (43, 41) pour stocker des valeurs du premier signal vidéo corrigé (Vec) comportent un additionneur (40) et une mémoire vive (41) constituant un accumulateur pour calculer une valeur moyenne du premier signal vidéo corrigé (Vec), pour chaque cellule, sur un nombre prédéterminé d'images.

6. Dispositif selon la revendication 3, caractérisé en ce que les moyens (31, 33 à 36) pour stocker pendant la période de pré-calibration, puis restituer, les valeurs du signal vidéo (Ve) fourni par le capteur, comportent :

- un convertisseur analogique-numérique multiplieur (31) ;

- une mémoire numérique (36) ;

- un convertisseur numérique-analogique (33) ;

en ce que les moyens (30) pour déterminer un signal proportionnel à la luminance moyenne d'au moins une image précédant une image en cours de correction comportent un moyenneur analogique (30) ; le convertisseur numérique-analogique multiplieur (31) faisant le produit d'une valeur numérique fournie par la mémoire (36) et d'une valeur analogique fournie par le moyenneur (30), pour fournir une valeur analogique du premier signal de correction ;

en ce que, pour soustraire cette dernière valeur une valeur du signal vidéo (Ve) fourni par le capteur, les premiers moyens de correction (21) comportent un soustracteur analogique (32), fournissant une valeur analogique du premier signal vidéo corrigé (Vec) ; cette valeur analogique étant ensuite convertie en une valeur numérique par le convertisseur analogique-numérique (33) des moyens pour stocker.

7. Dispositif selon les revendications 4 et 6, caractérisé en ce que les moyens pour augmenter la dynamique du premier signal vidéo corrigé comportent un dispositif (37) fournissant une tension de référence, réglable, à une entrée de référence du convertisseur analogique-numérique (33) ;

et en ce que les moyens pour augmenter la dynamique du second signal de correction comportent un registre à décalage (42) pour décaler les valeurs numériques du second signal de correction, d'un nombre de bits réglable.

**Capteur** — 1

**C. A. N.** — 2

Ve

10 — 10

**Correction variable en fonction de Tf**

**Mémoire des sensibilités** — 11

10

Tf → **Multiplieur** — 12

+ — 13

− **Soustracteur**

3

**Correction variable en fonction de Ts**

**Mémoire des sensibilités** — 11'

10

Ts → **Multiplieur** — 12'

+ — 13'

− **Soustracteur**

4

**Correction complémentaire fixe**

**Additionneur** — 14

Commande de calibration → **Mémoire vive** — 15

+ — 16

− **Soustracteur**

5

10

**Séquenceur** — 8

**C. N. A.** — 6

7

ART ANTÉRIEUR

# FIG.1

FIG.2

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 176 389 (THOMSON-CSF) * résumé; page 1, ligne 17 - page 4, ligne 20; page 5, ligne 7 - page 7, ligne 27 * --- | 1-4,6,7 | H 04 N 5/33 H 04 N 5/217 G 01 J 5/48 |
| A | PATENT ABSTRACTS OF JAPAN vol. 13, no. 316 (P-900)(3664), 18 juillet 1989; & JP-A-1088126 (FUJITSU) 03.04.1989 --- | 1,6 | |
| A | PATENT ABSTRACTS OF JAPAN vol. 6, no. 229 (P-155)(1107), 16 novembre 1982; & JP-A-57132031 (FUJITSU) 16.08.1982 --- | 1,3,5,6 | |
| A | PATENT ABSTRACTS OF JAPAN vol. 10, no. 152 (P-462)(2208), 3 juin 1986; & JP-A-61004932 (NIPPON AVIONICS K.K.) 10.01.1986 ----- | 4 | |

DOMAINES TECHNIQUES
RECHERCHES (Int. Cl.5)

H 04 N 5/00
G 01 J 5/00

Le présent rapport a été établi pour toutes les revendications

| Lieu de la recherche | Date d'achevement de la recherche | Examinateur |
|---|---|---|
| BERLIN | 05-12-1990 | MATERNE A G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)